# EUROPÄISCHE PATENTANMELDUNG

(11) **EP 1 600 793 A2**
(43) Veröffentlichungstag der Anmeldung: **30.11.2005**
(21) Anmeldenummer: 05101725.9
(22) Anmeldetag: 07.03.2005
(51) Int. Cl.: G01S 13/28, B60R 21/01

(54) **Radarsensor für Kraftfahrzeuge**

(30) Priorität: 19.05.2004 DE 102004024706
(71) Anmelder: ROBERT BOSCH GMBH, 70442 Stuttgart (DE)
(72) Erfinder: Mayer, Hermann, 71665 Vaihingen (DE); Lucas, Bernhard, 74354 Besigheim (DE); Hilsebecher, Joerg, 70839 Gerlingen (DE); Hauk, Joachim, 71272 Renningen-Malmsheim (DE); Haffmans, Paco, 71032 Boeblingen (DE)

(57) **Zusammenfassung**

Es wird ein Radarsensor für Kraftfahrzeuge zur Kollisionsvermeidung bzw. Kollisionsstärkenverminderung und/oder zur Auslösung einer Notbremsung vorgeschlagen, der Radarstrahlung aussendet und die an Objekten innerhalb des Radarerfassungsbereichs reflektierte Teilstrahlung empfängt und bezüglich der erkannten Objekte mindestens die Größen Abstand, Relativgeschwindigkeit bezüglich des Sensors sowie Azimutwinkel bezüglich der Hauptstrahlungsrichtung ermittelt. Zur Erhöhung der Redundanz für sicherheitsrelevante Anwendungen wird die ausgesandte und empfangene Radarstrahlung in mindestens zwei oder mehr unterschiedlichen Modulationsarten ausgesendet und im Empfangsteil ausgewertet.

## Beschreibung

Die vorliegende Erfindung betrifft einen Radarsensor für Kraftfahrzeuge zur Kollisionsvermeidung bzw. Kollisionsstärkenverminderung und/oder zur Auslösung einer Notbremsung, der Radarstrahlung aussendet und die an Objekten innerhalb des Radarerfassungsbereichs reflektierte Teilstrahlung empfängt und bezüglich der erkannten Objekte mindestens die Größen Abstand, Relativgeschwindigkeit bezüglich des Sensors sowie Azimutwinkel bezüglich der Hauptstrahlungsrichtung ermittelt. Zur Erhöhung der Redundanz für sicherheitsrelevante Anwendungen wird die ausgesandte und empfangene Radarstrahlung in mindestens zwei oder mehr unterschiedlichen Modulationsarten ausgesendet und im Empfangsteil ausgewertet.

### Stand der Technik

Aus der Veröffentlichung SAE 961010 mit dem Titel "Adaptive Cruise Control System Aspects and Development Trends" von Winner, Witte, Uhler und Lichtenberg, veröffentlicht auf der SAE International Congress & Exposition, Detroit, 26. - 29. Februar 1996 ist ein Radarsensor für Kraftfahrzeuge bekannt, der Radarstrahlung aussendet, die frequenzmodulierte Dauerstrichsignale aufweist. Durch den Empfang der an Objekten reflektierten Teilstrahlung ist es möglich, die Beschleunigung und Verzögerung des Fahrzeugs zu regeln, wobei je nachdem, ob ein vorherfahrendes Fahrzeug erkannt wurde, eine Geschwindigkeitsregelung im Sinne einer Abstandskonstantregelung oder eine Geschwindigkeitsregelung im Sinne einer Geschwindigkeitskonstantregelung erfolgt.

Aus der Veröffentlichung SAE 940904 mit dem Titel "Radar Based Automotive Obstacle Detection System" von Ulke, Adomat und Butscher, veröffentlicht auf der SAE International Congress & Exposition, Warrendale, 1994, ist ein Radarsensor für Kraftfahrzeuge bekannt, der eine adaptive Abstands- und Geschwindigkeitsregelung des Fahrzeugs ausführt und hierzu Radarstrahlung aussendet, die mit FM-Pulsen moduliert ist.

### Kern und Vorteile der Erfindung

Der Kern der vorliegenden Erfindung ist es, einen Radarsensor für Kraftfahrzeuge derart weiterzubilden, dass diese auch für sicherheitsrelevante Anwendungen, wie beispielsweise Kollisionsvermeidungssysteme, Kollisionsstärkenverminderungssysteme, automatische Notbremsfunktionen oder ähnliche, geeignet ist, indem durch die Verwendung mehrerer Modulationsarten eine Redundanz bezüglich des Aussendens und Empfangens der Radarstrahlung erreicht wird. Erfmdungsgemäß wird dieses durch die Merkmale des unabhängigen Anspruchs gelöst. Vorteilhafte Weiterbildungen und Ausgestaltungen ergeben sich aus den Unteransprüchen.

Vorteilhafterweise wird bezüglich der erkannten Objekte mindestens eine Größe ermittelt, wobei dieses mindestens eine Größe der Abstand (d), die Relativgeschwindigkeit (vrel) bezüglich des Sensors, der Azimutwinkel (phi) bezüglich der Hauptstrahlungsrichtung, die verbleibende Zeit bis zur Kollision mit dem erkannten Objekt oder eine Kombination hieraus ist.

Vorteilhafterweise werden die mindestens zwei oder mehr unterschiedlichen Modulationsarten abwechselnd verwendet.

Weiterhin ist es vorteilhaft, dass der Wechsel der Modulationsart in Abhängigkeit einer oder mehrerer der ermittelten Größen oder einer erkannten Störung erfolgt.

Weiterhin ist es vorteilhaft, dass die zwei oder mehr unterschiedlichen Modulationsarten eine Kombination aus Dauerstrichmodulation, frequenzmodulierter Dauerstrichmodulation, frequenzmodulierter Dauerstrichmodulation mit einer oder mehreren steigenden und/oder fallenden Frequenzrampen, Pulsmodulation, Puls-Doppler-Modulation, frequenzmodulierter Pulsmodulation, Frequenzumtastmodulation (FSK) oder Phasenumtastmodulation (PSK) oder einer Kombination hieraus ist.

Weiterhin ist es vorteilhaft, dass zur Erhöhung der Redundanz für jede Modulationsart im Empfänger ein eigener Empfangskanal vorgesehen ist.

Weiterhin ist es vorteilhaft, dass die zwei oder mehr unterschiedlichen Modulationsarten den gleichen Objekterfassungsbereich aufweisen.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Zeichnungen.

### Zeichnungen

Nachfolgend werden Ausführungsbeispiele der Erfmdung anhand von Zeichnungen erläutert. Es zeigen
- Figur 1: ein schematisches Blockdiagramm einer ersten Ausführungsform der Erfindung,
- Figur 2: ein schematisches Blockdiagramm einer zweiten Ausführungsform der erfindungsgemäßen Vorrichtung und
- Figur 3: unterschiedliche Modulationsmuster durch Umschaltung zwischen den Modulationsarten.

### Beschreibung von Ausführungsbeispielen

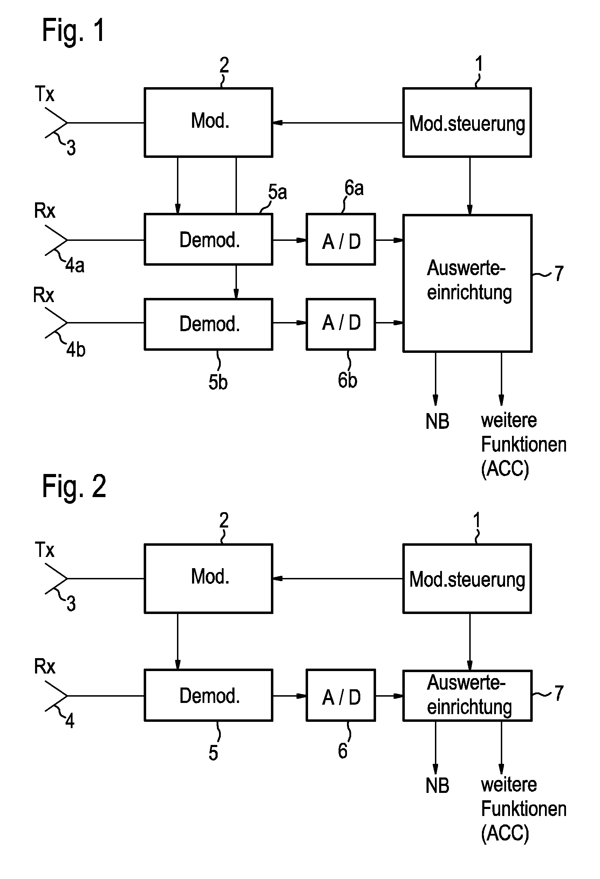

In Figur 1 ist eine Modulationssteuerung 1 dargestellt, die Ausgangssignale an einen Modulator 2 ausgibt. Dabei kann die Modulationssteuerung 1 beispielsweise ein Mikroprozessor oder Signalprozessor sein, der einen spannungsgesteuerten Oszillator (VCO) ansteuert und dementsprechend zeitliche Rampen mit einer vordefmierten Steigung und Dauer ausgibt. Weiterhin ist es möglich, dass die Modulationssteuerung 1 Signale ausgibt, mittels denen ein Schalter im Modulator 2 geschlossen werden kann, um Radarpulse oder FM-Pulse zu erzeugen. Weiterhin kann im Modulator 2 beispielsweise eine Gunn-Diode vorgesehen sein oder eine andere, Hochfrequenzstrahlung erzeugende Einrichtung, die mittels dem VCO-Ausgangssignal der Modulationssteuerung 1 angesteuert wird. Mittels der Modulationssteuerung 1 und dem Modulator 2 ist es demnach möglich, unterschiedliche Modulationsarten wie beispielsweise eine Dauerstrichmodulation, eine frequenzmodulierte Dauerstrichmodulation, eine frequenzmodulierte Dauerstrichmodulation mit einer oder mehreren steigenden und/oder fallenden Frequenzrampen, eine Pulsmodulation, eine Puls-Doppler-Modulation, eine frequenzmodulierte Pulsmodulation, eine Frequenzumtastmodulation oder eine Phasenumtastmodulation oder eine Kombination hieraus zu erzeugen. Die erzeugte und derart modulierte Radarstrahlung wird mittels der Sendeantenne 3 (Tx) ausgesandt und von Objekten, die beispielsweise vor dem eigenen Fahrzeug herfahren oder sich im Bereich vor dem Fahrzeug befinden, reflektiert. Die reflektierten Teilwellen werden von den Empfangsantennen 4a, 4b (Rx) empfangen und Demodulationseinrichtungen 5a, 5b zugeführt. Die Demodulationseinrichtungen 5a, 5b erhalten von der Modulationseinrichtung 2 Sendesignale, die mit den über die Sendeantenne 3 ausgestrahlten Signalen identisch sind. Diese Sendesignale werden von den Demodulationseinrichtungen 5a, 5b zur Demodulation mittels eines Mischers benötigt, um beispielsweise im Fall einer Dopplermodulation die Dopplerverschiebung zu ermitteln oder im Fall einer FMCW-Modulation die Frequenzverschiebung infolge Laufzeit- und Dopplerverschiebung zu ermitteln. Die in den Einrichtungen 5a und 5b demodulierten Signale werden an nachgeschaltete Analog-/Digital-Wandler 6a, 6b ausgegeben, die die von den Demodulatoren 5a, 5b erzeugten Zwischenfrequenzsignale digitalisieren und einer Auswerteeinrichtung 7 zuführen. Die Auswerteeinrichtung 7 kann beispielsweise aus einem Mikroprozessor oder einem Signalprozessor bestehen und eine Fouriertransformation der ihr zugeführten, digitalisierten Zwischenfrequenzsignale durchführen und eine Spektralauswertung der Zwischenfrequenzspektren vornehmen. Weiterhin wird der Auswerteeinrichtung 7 ein Signal von der Modulationssteuerung 1 zugeführt, wobei die Modulationssteuerung 1 mittels diesem Signal der Auswerteeinrichtung 7 mitteilt, welche Modulationsart momentan ausgestrahlt wird und von den Empfangseinrichtungen empfangen wird. Mittels der Auswerteeinrichtung 7 werden objektbezogene Größen für jedes erkannte Objekt innerhalb des Radarerfassungsbereichs ermittelt. So werden z. B. für jedes Objekt mindestens die Größen, Abstand d, Relativgeschwindigkeit vrel zum eigenen Fahrzeug sowie Azimutwinkel phi bezüglich der Radarzentralachse ermittelt und ausgewertet. Diese Werte können beispielweise einer adaptiven Abstands- und Geschwindigkeitsregelung (ACC) zugeführt werden, wo diese Größen von einem Geschwindigkeitsregelalgorithmus weiterverarbeitet werden. Ebenfalls ist es möglich, dass die Auswerteeinrichtung 7 die objektbezogenen Größen d, vrel, phi auswertet und hinsichtlich der Kollisionswahrscheinlichkeit des eigenen Fahrzeugs mit dem vorausbefmdlichen Objekt auswertet. Wird festgestellt, dass eine Kollision unmittelbar bevorsteht und eine Notbremsung ausgeführt werden muss, so kann beispielsweise die Auswerteeinrichtung 7 mittels des Ausgangssignals NB eine automatische Notbremsung auslösen. Weiterhin ist es möglich, dass die Vorrichtung gemäß Figur 1 nicht nur zwei eigenständige Empfangskanäle 4a, 5a, 6a sowie 4b, 5b, 6b aufweist, sondern dass beispielsweise bei der Verwendung von drei oder mehr Modulationsarten auch drei oder mehr Empfangskanäle vorgesehen sind. Weiterhin ist es auch möglich, gemäß Figur 2 eine Vorrichtung vorzusehen, die nur mit einem Empfangskanal auskommt, da alle vorgesehenen Modulationsarten durch die Demodulationseinrichtung 5 demodulierbar sind. In diesem Fall genügt auch das Vorsehen eines Analog-/Digital-Wandlers 6, der der Auswerteeinrichtung 7 die digitalisierten Zwischenfrequenzsignale zuführt. Es kann weiterhin vorgesehen sein, dass bei der Verwendung mehrerer Modulationsarten auch mehrere Empfangskanäle 4, 5, 6 vorgesehen sind, jedoch die Anzahl an Empfangskanälen geringer ist als die Anzahl verwendeter Modulationsarten. So können mittels einem Empfangskanal mehrere Modulationsarten demoduliert werden, jedoch nicht alle bei der Verwendung sehr unterschiedlicher Modulationsarten.

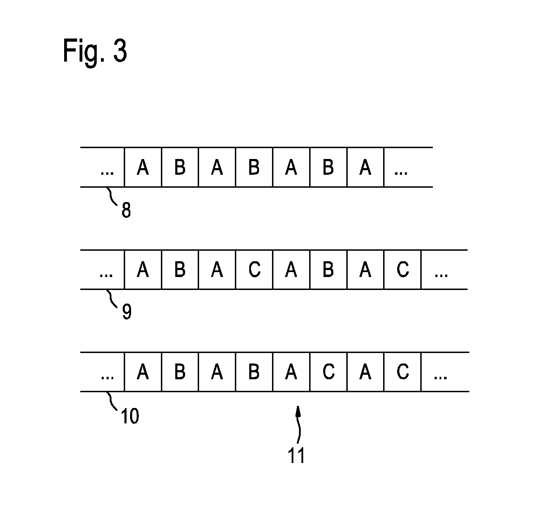

In Figur 3 sind drei Modulationsmuster dargestellt, die angeben, in welcher Abfolge beispielsweise die Modulationsarten umgeschaltet werden können. So zeigt das Modulationsmuster 8 eine Abfolge zweier Modulationsarten A, B, wobei diese beiden Modulationsarten abwechselnd aktiviert werden. In Analogie zum Modulationsmuster 8 ist es möglich, bei der Verwendung von drei Modulationsarten diese reihum also in der Abfolge A-B-C-A-B-C-A durchzuschalten. Gemäß dem Modulationsmuster 9 können ebenfalls drei Modulationsarten verwendet werden, wobei die eine Modulationsart abwechselnd mit zwei anderen Modulationsarten verwendet wird. Gemäß dem Modulationsmuster 10 kann weiterhin vorgesehen sein, dass bestimmte Modulationsarten nur verwendet werden, wenn ein Ereignis 11 eingetreten ist. So ist es beispielsweise gemäß dem Modulationsmuster 10 möglich, die Modulationsarten A und B abwechselnd zu verwenden und nach Eintritt des Ereignisses 11 die Modulationsarten A und C abwechselnd zu verwenden, so dass die Modulationsart B durch die Modulationsart C ersetzt wurde. Das Ereignis 11 kann beispielsweise eine Störung im Empfang sein, die durch die Modulationsarten A und B nicht exakt bestimmt werden kann, so dass die Modulationsart C verwendet wird, um eine Plausibilisierung der Ergebnisse der Modulationen A und B durchzuführen. Weiterhin ist es möglicht, dass das Ergebnis 11 eine vorbestimmte Objektkonstellation ist, die beispielsweise infolge eines vorherfahrenden Fahrzeugs, das einen Mindestabstand dmin unterschreitet und eine Relativgeschwindigkeit vrel aufweist, die darauf hinweisen, dass eine Kollision möglich ist. In diesem Fall wird die Modulationsart B durch die Modulationsart C ersetzt, da in diesem Fall die Modulationsart C beispielsweise genauere Ergebnisse hinsichtlich des kollisionsgefährlichen Objektes zur Verfügung stellt.

## Patentansprüche

1. Radarsensor für Kraftfahrzeuge, insbesondere zur Kollisionsvermeidung bzw. Kollisionsstärkenverminderung und/oder zur Auslösung einer Notbremsung (NB), der Radarstrahlung aussendet (Tx) und die an Objekten innerhalb des Radarerfassungsbereichs reflektierte Teilstrahlung empfängt (Rx), **dadurch gekennzeichnet, dass** die ausgesandte (Tx) und empfangene Radarstrahlung (Rx) in mindestens zwei oder mehr unterschiedlichen Modulationsarten (A,B,C) ausgesendet und im Empfangsteil (5,6) ausgewertet wird.

2. Radarsensor nach Anspruch 1, **dadurch gekennzeichnet, dass** bezüglich der erkannten Objekte mindestens eine Größe ermittelt wird.

3. Radarsensor nach Anspruch 2, **dadurch gekennzeichnet, dass** die mindestens eine Größe der Abstand (d), die Relativgeschwindigkeit (vrel) bezüglich des Sensors, der Azimutwinkel (phi) bezüglich der Hauptstrahlungsrichtung, die verbleibende Zeit bis zur Kollision mit dem erkannten Objekt oder eine Kombination hieraus ist.

4. Radarsensor nach einem der vorhergehenden Ansprüche, **dadurch gekennzeichnet, dass** die mindestens zwei oder mehr unterschiedlichen Modulationsarten (A,B,C) abwechselnd verwendet werden.

5. Radarsensor nach einem der vorhergehenden Ansprüche, **dadurch gekennzeichnet, dass** der Wechsel der Modulationsart (A,B,C) in Abhängigkeit einer oder mehrerer der ermittelten Größen (11, d, vrel, phi) oder einer erkanntem Störung (11) erfolgt.

6. Radarsensor nach einem der vorhergehenden Ansprüche, **dadurch gekennzeichnet, dass** die zwei oder mehr unterschiedlichen Modulationsarten (A,B,C) eine Kombination aus
Dauerstrichmodulation (CW), frequenzmodulierter Dauerstrichmodulation (FMCW), frequenzmodulierter Dauerstrichmodulation mit einer oder mehreren steigenden und/oder fallenden Frequenzrampen, Pulsmodulation (PM), Puls-Doppler-Modulation (PDM), frequenzmodulierter Pulsmodulation (FM-Puls), Frequenzumtast- -Modulation (FSK), Phasenumtast-Modulation (PSK) oder einer Kombination hieraus ist.

7. Radarsensor nach einem der vorhergehenden Ansprüche, **dadurch gekennzeichnet, dass** zur Erhöhung der Redundanz für jede Modulationsart (A,B,C) im Empfänger ein eigener Empfangskanal (4,5,6) vorgesehen ist.

8. Radarsensor nach einem der vorhergehenden Ansprüche, **dadurch gekennzeichnet, dass** die zwei oder mehr unterschiedlichen Modulationsarten (A,B,C) den gleichen Objekterfassungsbereich aufweisen.
